# EUROPEAN PATENT SPECIFICATION

(11) **EP 2 405 607 B1**
(45) Date of publication and mention of the grant of the patent: **09.05.2018**
(21) Application number: 09844826.9
(22) Date of filing: 21.12.2009
(51) Int. Cl.: H04L 29/06, G07D 7/004, G06F 21/60, G06Q 10/06

(54) **PRIVILEGE MANAGEMENT SYSTEM AND METHOD BASED ON OBJECT**
PRIVILEGIENVERWALTUNGSSYSTEM UND VERFAHREN AUF OBJEKTBASIS
SYSTÈME ET PROCÉDÉ DE GESTION DE PRIVILÈGES BASÉS SUR UN OBJET

(30) Priority: 22.05.2009 CN 200910143354
(43) Date of publication of application: 11.01.2012
(73) Proprietor: ZTE Corporation, Shenzhen, Guangdong 518057 (CN)
(72) Inventor: WANG, Fenglai, Guangdong 518057 (CN)
(74) Representative: Novagraaf Technologies
(86) International application number: PCT/CN2009/075747
(87) International publication number: WO 2010/133074

(56) References cited:
- WO-A1-00/25214
- WO-A1-2005/066850
- CN-A- 1 852 145
- CN-A- 101 093 524
- CN-A- 101 572 630
- US-A1- 2004 064 724
- US-A1- 2004 128 547

## Description

### Field of the Invention

The present invention relates to the authorization management field, and in particular to a system and a method for managing authorization based on objects.

### Background of the Invention

Document US 2004/064724 discloses controlling access to a resource, including creating a security object in dependence upon user-selected security control data types, including asserting security control data as security facts into a security knowledge database and asserting security rules into the security knowledge database, the security object including security control data and at least one security method, receiving a request for access to the resource, and receiving security request data. Document WO 2000/25214 discloses a system that comprises a policy manager, which manages and distributes a security policy, and an application guard which manages access to components to be secured as specified by the security policy. Document US 2004/128547 discloses a method and system for modular authentication and session management, which involves the use of discrete modules to perform specific tasks in a networked computing environment. There is a separate authentication server that verifies the identity of the user and an authorization client that grants various levels of access to users. There is also an authentication client that receives an initial request from a requesting application and forwards the request to the authentication server to verify the identity of the use. The authorization client may then be invoked to provide the necessary level of access. The use of discrete modules allows multiple business applications to use the same modules to perform user authentication tasks, thus alleviating the unnecessary multiplication of code. Currently, the authorization management is applied widely. Any system involving a user will relate to authorization management. Any multi-user system is inevitably related to security services such as entity authentication, data confidentiality, data integrity, and access control, and it is the essential function of an application system to perform authorization management on the users. With the rapid development of network scale and services, the authorization management becomes more and more important, and also more and more complicated. Thus, it is very important to build a strong system for managing authorization to ensure security of the system.

In the existing system for managing authorization, the system mainly consists of an authorization module, database, and an authentication module, wherein the authorization module is configured to set the authorized resources complying with one or more condition expressions as a category which is taken as an authorized object; the database is configured to store content metadata and authorization rules written in advance by the authorization module, wherein the authorization rules are written in a configuration file in some systems; and the authentication module is configured to read the authorization rules from the database during the authentication, and to determine whether a user has the authorization for operation. In some systems, a full-text index is established for the authorized resources, to improve the performance of the authentication module.

However, the problems mainly with the existing system for managing authorization are described as follows.
1) The user object is embodied and is not sufficiently abstracted, and it is difficult to manage the system when there are multiple types of users in the system. For example, in the system, there are multiple types of users, such as Content Provider Service Provider (CPSP) administrators, operator administrators, enterprise administrators and ordinary users. The user type for the existing system can only be one of these types. However, it is always desired that a user not only has the identity of CPSP administrator, but also has some authorizations of operator administrators, or some user can simultaneously manage multiple different CPSPs in practice.
2) The mode for organizing authorization resources is unitary, which cannot achieve fine control, and cannot achieve decentralized and domain split management. In the existing authorization system, the authorization resources are mainly divided into two parts, ie. function authorization and data authorization, wherein the function authorization indicates operations that a user is authorized to perform, such as addition, deletion, modification and query, and the data authorization defines the range of the resources that can be operated by a user, for example, user A can only browse information of human resources department. The authorization modeling is two-dimensional, and if a new dimension is added, such as time dimension, the user A can only access the system between 9:00 am to 12:00 am, and the two-dimensional mode is no longer applicable. In addition, if the information of the human resources department is divided into two categories, one is information of management cadres of the company, and the other is information of ordinary staff of the company, and assuming that the user A can only browse information of the ordinary staff of the human resources department, fine control cannot be achieved on the above operations according to the method of dividing the authorization resources into function authorization and data authorization.
   Authorization management includes two parts, ie. decentralized management and domain split management. The domain split management is to control levels that can be managed by a user, according to the different levels the user operations relate to, from the perspective of the levels of a management object. For example, in a system, there are provincial administrators and municipal administrators, and the authorization of the municipal administrators shall be allocated by the provincial administrators. The decentralized management is to perform control of authorization on operations within the management range of the same level. The existing system for managing authorization often ignores the domain split management, and performs the domain split management as the decentralized management, which results in complexity of the authorization management and difficulty to maintain.
3) Different application systems are independent from each other in authorization management, but are closely coupled with each other on the aspects of data storage, authorization access and authorization control, which leads to weak generality of system for managing authorization and serious situation of repeated development.

### Summary of the Invention

One aspect of the present invention is to provide a system for managing authorization based on objects.

Another aspect of the present invention is to provide a method for managing authorization based on objects. The invention is defined in the independent claims. Particular embodiments are set out in the dependent claims. The advantageous effects of the present invention are: according to the system and method for managing authorization based on objects, coarse-grained abstraction is performed on the user, the abstracted object does not have identity characteristics, the abstracted object may be provided with corresponding identity characteristics according to the requirements of the application system, or may simultaneously have multiple different identity characteristics; fine-grained modeling is performed on the authorization, wherein the fine-grained modeling comprises domain split modeling and decentralized modeling, the domain split modeling being longitudinal, including the information of domain levels, and also supporting the extension of user-defined levels; the decentralized modeling being transverse, including authorization resources such as function authorization, data authorization and user-defined authorization, wherein these authorization resources can be either one-dimensional or multi-dimensional. The abstracted object is provided with identity characteristics and authorization characteristics, to enable authorization management to become the core of authorization control, so as to form a universal and portable system for managing authorization which can perform fine control and easily to be extended.

### Brief Description of the Drawings

Figure 1 is a schematic diagram of the structure of a system for managing authorization;
Figure 2 is a schematic diagram of the operational principle of the object management module;
Figure 3 is a schematic diagram of authorization model of the authorization resource management module;
Figure 4 is an embodiment diagram of authorization model of the authorization resource management module;
Figure 5 is a schematic diagram of authorization and authentication of the authorization and authentication management module; and
Figure 6 is a schematic diagram of the flow of the operations of the present invention.

### Detailed Description of Embodiments

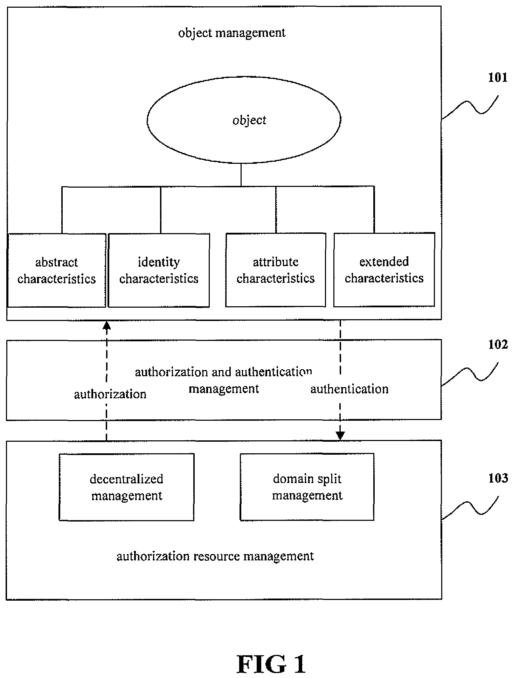

The system and method for managing authorization based on objects according to the present invention are described in detail with reference to Figures 1-6. Some of the embodiments described hereinafter are not embodiments of the invention according to the claims. Figure 1 is a schematic diagram of the structure of a system for managing authorization based on objects according to the present invention. The system for managing authorization comprises an object management module 101, an authorization and authentication management module 102 and an authorization resource management module 103.

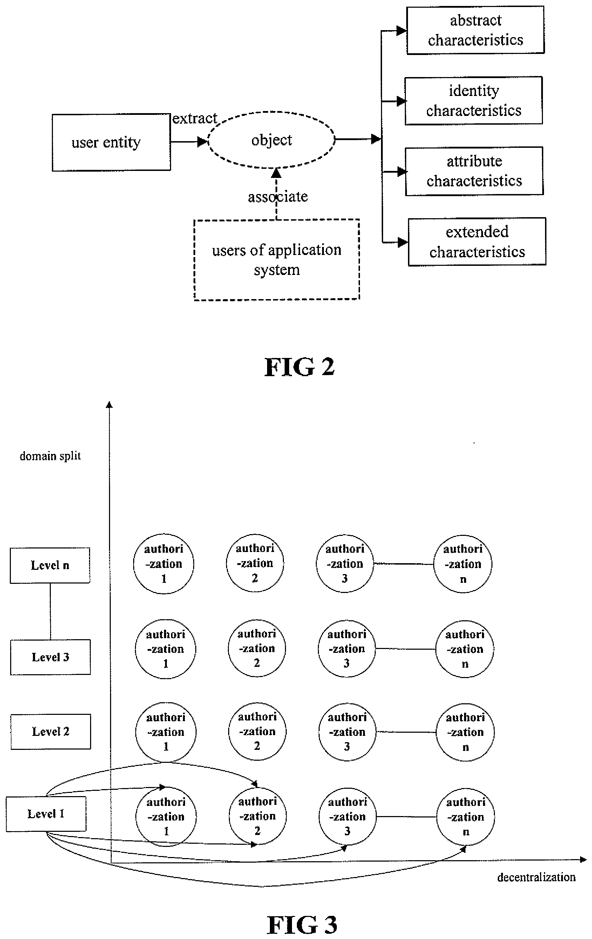

Wherein the object management module is configured to extract an object from a user entity and to associate the extracted object with an entity object in an application system to realize management on the entity object of an application system. Figure 2 is a schematic diagram of the operational principle of the object management module.

Wherein the object extracted from the user entity only includes abstract characteristics, the abstract characteristics are applicable to different application systems, are the common characteristics of the objects of the application system, and do not include the information related to specific application system, such as identity and attribute.

In addition, in the object management module, the process of associating the extracted object with the entity object in the application system is the process of establishing association between the extracted object and the information related to specific application system, such as identity and attribute, which prepares for the access of different application systems to the system for managing authorization.

By means of this embodiment, by performing coarse-grained abstraction on the user, fine-grained modeling on the authorization, and uniform authorization and authentication control on the authorization resources, the problem that the management is difficult when multiple user types exist in different application systems is settled, which enables fine control on the authorization resources, satisfies the requirements for managing authorization of different application systems, and enhance the generality of the system.

Specifically, Table 1 shows n objects extracted from the system for managing authorization. The objects in the object table only include abstract characteristics which can be construed as the common characteristics of the application systems, such as object name and password which are used in all the application systems.

**Table 1 object table**

| | | | |
|---|---|---|---|
| object id | object name | object password | ... |
| object 1 | object name 1 | password 1 | ... |
| object 2 | object name 2 | password 2 | ... |
| object 3 | object name 3 | password 3 | ... |
| ... | ... | ... | ... |
| object n | object name n | password n | ... |

The process of extracting an object from an user entity is actually the process of dividing the user entity in the application system into object data and characteristic data and respectively storing the object data and characteristic data, wherein the object data including abstract characteristics is stored in the object table, and the characteristic data is stored in the characteristic table (Table 2).

**Table 2 characteristic table**

| | | |
|---|---|---|
| Characteristic id | characteristic type | characteristic name |
| characteristic 1 | identity characteristic | forum administrator |
| characteristic 2 | identity characteristic | registered user |
| characteristic 3 | identity characteristic | visitor |
| characteristic 4 | attribute characteristic | characteristic name 4 |
| characteristic 5 | extended characteristic | characteristic name 5 |
| ... | ... | ... |
| characteristic n | other characteristics | characteristic name n |

The process of associating the extracted object with the entity object in the application system, as shown in Table 3, is the process of associating objects in the object table with characteristics in the characteristic table.

**Table 3 object characteristic association table**

| | | |
|---|---|---|
| object characteristic association id | object id | characteristic id |
| association id1 | object 1 | characteristic 1 |
| association id2 | object 2 | characteristic 2 |
| association id3 | object 3 | characteristic 3 |
| ... | ... | |

Now an example is given for further explanation.

For example, there are three kinds of users in a bbs forum, i.e., forum administrator, registered user and visitor.

These three kinds of user entities have different identity characteristics, and have different authorizations, for example, the forum administrator has the authorization to add, delete, modify and query posts in the forum, the registered user has the authorization to add, modify and query the posts, and a visitor only has the authorization to query the posts.

On the extraction of object from the user entity terms, ie. regardless of the difference among the forum administrator, the registered user and the visitor, they are all users in the bbs forum, which is the common point. Therefore they have abstract characteristics, are three objects in the object table, and respectively have the common attributes such as user name and password. As to whether it is an administrator or an ordinary registered user, these identity characteristics are stored in the characteristic table, which has three characteristics whose characteristic types are identity characteristic and characteristic names are forum administrator, registered user and visitor.

To associate the extracted object with the application system is to establish the association in Table 3, for example, the object 1 in the object table is associated with the characteristic whose characteristic name is forum administrator in the characteristic table, which indicates that the object 1 possesses the identity characteristic of forum administrator.

The characteristic types are extendable according to the requirements of a specific application system, and a single characteristic type represents different identity characteristics according to the difference of characteristic names.

In Table 3, one object is associated with one characteristic, while in practical application system, one object can be associated with multiple characteristics, for example, the object can be associated with identity characteristic and attribute characteristic, respectively.

The authorization resource management module is configured to model the authorization, perform the domain split and decentralized management on authorization resources; wherein the domain split management is performed on users at different levels, and the decentralized management is performed on users at the same level, so as to enable fine control on the authorization resources. In the present invention, different grades indicate different levels, the same grade indicates the same level, and the level of the grades can include the lever of domain grade and identity grade and so forth.

In the above, the domain split management is to control levels that can be managed by a user, according to the different levels the user operations relate to, from the perspective of the levels of a management object; and the decentralized management is to perform control of authorization on operations within the management range of the same level. Wherein, the authorization resources include function authorization, data authorization and user-defined authorization, and the authorization resources can be one-dimensional or multi-dimensional, or can be cross-authorization, so as to enable fine control on the authorization resources. Figure 3 is a schematic diagram of authorization model of the authorization resource management module.

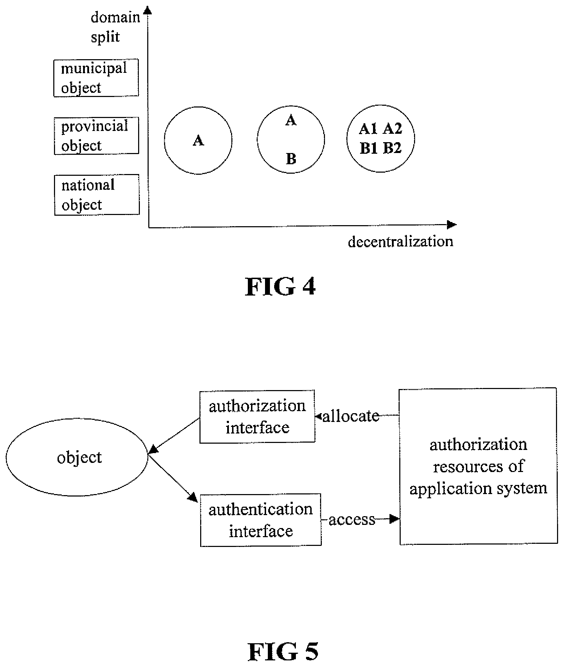

The above decentralized and domain split model is described with an example as follows. Figure 4 is an embodiment diagram of authorization model of the authorization resource management module.

Suppose that the levels of the domain split management are divided based on administrative areas, including management levels such as a national object, a provincial object and a municipal object; and suppose that the domain split management owns function authorization A and service data authorization B, wherein A is divided into view operation A1 and modification operation A2, and B is divided into high-level customer data B1 and ordinary customer data B2, the resources that can be authorized to the national objects include A1B1, A1B2, A2B1 and A2B2, the resources that can be authorized to the provincial objects include A1B1 and A1B2, and the resources that can be authorized to the municipal objects include A1B2. Of course, the above authorization resources can be extended, and if it is necessary to control operations in a time period, the time dimension C can be added.

The authorization and authentication management module is configured to authorize the authorization resources to an entity object with identity characteristics and perform authentication when the object is accessing the authorization resources so as to obtain access authentication, wherein after the authentication succeeds, the object obtains an authorization permission and is accessing the authorization resources, so as to enable the control on the authorization resources, otherwise, the object is refused access to the authorization resources.

Furthermore, the authorization and authentication management module can provide universal authorization and authentication interfaces, authorization resources are allocated through the authorization interface for the object extracted by the object management module, when the object is accessing an application system, the access authentication is obtained through the authentication interface, if the authentication succeeds, the object obtains a authorization permission, if the authentication fails, the object is refused access, so as to be adapted to different service systems. Figure 5 is a schematic diagram of authorization and authentication of the authorization and authentication management module, and different application systems can realize authorization distribution of respective systems only by calling the service.

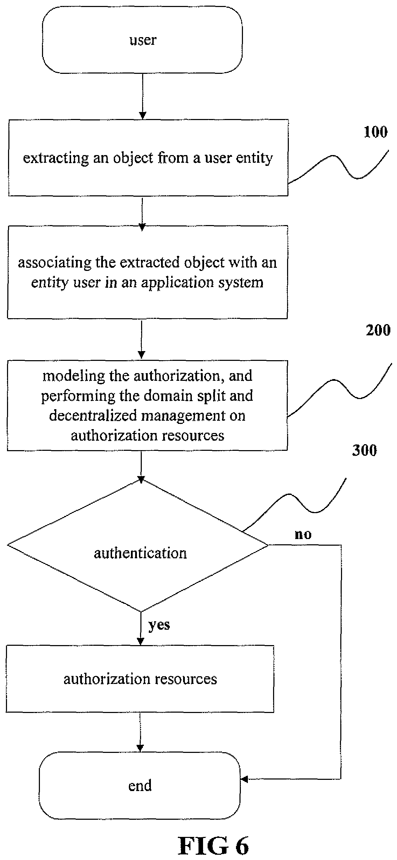

As shown in Figure 6, the method for managing authorization based on objects according to the present invention comprises the following steps.

step 100: an object is extracted from a user entity and the extracted object is associated with an entity object in an application system.

In the above, in the step 100, the object extracted from the user entity only includes abstract characteristics; the abstract characteristics are applicable to different application systems, are the common characteristics of the objects of the application system, and do not include the information related to specific application system, such as identity and attribute.

Furthermore, in the step 100, the process of associating the extracted object with the entity object in the application system is the process of establishing association between the extracted object and the information related to specific application system, such as identity and attribute, which prepares for the access of different application systems to the system for managing authorization.

step 200: the authorization is modeled, and the domain split and decentralized management is performed on authorization resources; wherein the domain split management is performed on users at different levels, and the decentralized management is performed on users at the same level.

In the above, the domain split management is to control levels that can be managed by a user, according to the different levels the user operations relate to, from the perspective of the levels of a management object; and the decentralized management is to perform control of authorization on operations within the management range of the same level and; the authorization resources include function authorization, data authorization and user-defined authorization, and the authorization resources can be one-dimensional or multi-dimensional, or can be cross-authorization, so as to enable fine control on the authorization resources.

step 300: the authorization resources is authorized in the step 200 to an entity object with identity characteristics and authentication is performed when the object is accessing the authorization resources so as to obtain access authentication, wherein after the authentication succeeds, the object obtains an authorization permission and is accessing the authorization resources, so as to enable the control on the authorization resources, otherwise, the object is refused access to the authorization resources.

In the above, in the step 300, the authentication operation can be realized by the service exposed in the authentication interface, and different application systems can realize access authentication of respective application systems only by calling the service.

On the basis of the above, compared with the existing system for managing authorization, the system and method for managing authorization based on objects according to the present invention have the following advantages:
1) in the present invention, the object extracted from the entity only includes abstract characteristics, the abstract characteristics are applicable to different application systems, and do not include the information such as identity and attribute, wherein identity characteristics, attribute characteristics and extened characteristics are applicable to specific application systems, and the information are defined by specific application systems, thus, the users of multiple types in different application systems can be managed flexibly;
2) in the present invention, the decentralized and domain split management are performed on the authorization resources, the domain split management is to control levels that can be managed by a user, according to the different levels the user operations relate to, from the perspective of the levels of a management object, and the decentralized management is to perform control of authorization on operations within the management range of the same level, the authorization resources include function authorization, data authorization and user-defined authorization, and the authorization resources can be one-dimensional or multi-dimensional, or can be cross-authorization, thus, fine control on the authorization resources can be achieved;
3) in the present invention, the authorization and authentication management module can provide universal authorization and authentication interfaces, thus, authorization and authentication can be performed for different application systems, which are adapted to different service systems.

Thus, in the present invention, a universal system for managing authorization which can perform fine control and is easy to be extended is realized by employing the method for managing authorization based on objects.

The above detailed descriptions on the present invention only serve the purpose of the understanding of the present invention for the person skilled in the art. However, it shall be appreciated that the present invention may have various changes and modifications, without departure from the scope of the claims of the present invention. These changes and modifications shall be all concluded within the principle of the present invention.

## Claims

1. A system for managing authority based on user objects, comprising an object management module, (101) an authorization and authentication management module (102) and an authority resource management module, (103) wherein the authorization and authentication management module, (102) configured to authorize authority resources to an entity object with same identity information as a user has authority to use the authority resource and to perform authentication when the entity object is accessing the authority resources so as to obtain access authentication, wherein after the authentication succeeds, the user object obtains an authorization permission and accesses the authority resources, otherwise, the user object is refused access to the authority resources;
**characterized in that** the object management module (101) is configured to extract a user object from a user entity and subsequently to establish association between the extracted user object and information related to an application system; and the user object extracted from the user entity only comprises abstract characteristics, the abstract characteristics being common characteristics of the user objects of different application systems, and the information related to the application system including identity information and attribute information;
and **in that** the authority resource management module (103) is configured to model an authority, to perform domain split and decentralized management on the authority resources; and the domain split management is performed on users at different levels, while the decentralized management is performed on users at the same level.

2. The system for managing authority based on user objects according to Claim 1, wherein
the user object extracted from the user entity by the object management module comprises: dividing a user entity in an application system into object data and characteristic data, and storing the object data in an object table and the characteristic data in a characteristic table.

3. The system for managing authority based on objects according to Claim 1, wherein the authority resources include function authority, data authority and user-defined authority, and the authority resources are one-dimensional or multi-dimensional, or cross-authorization.

4. The system for managing authority based on user objects according to Claim 1, wherein the authorization and authentication management module provides a universal authorization interface and a universal authentication interface, the authority resources are allocated through the authorization interface for the user object extracted by the object management module, when the user object is accessing an application system, the access authentication is obtained through the authentication interface, if the authentication succeeds, the user object obtains an authorization permission, if the authentication fails, the object is refused access.

5. The system for managing authority based on user objects according to Claim 1, wherein, when the object management module associates the extracted user object with the entity object in the application system, one user object is associated with one or more characteristics of the entity object in the application system of object association, the characteristics include identity information, attribute information and extended characteristic information.

6. A method for managing authority based on user objects, comprising a step of authorizing authority resources to an entity object with same identity information as a user has authority to use the authority resource and performing authentication when the user object is accessing the authority resources so as to obtain access authentication, wherein after the authentication succeeds, the user object obtains an authorization permission and accesses the authority resources, otherwise, the user object is refused access to the authority resources;
**characterized in that** it comprises the following steps:
extracting a user object from a user entity and subsequently establishing association between the extracted user object and information related to an application system; wherein the user object extracted from the user entity only includes abstract characteristics, the abstract characteristics being common characteristics of the user objects of different application systems, and the information related to the application system including identity information and attribute information;
modeling an authority, and performing domain split and decentralized management on the authority resources; wherein the domain split management is performed on users at different levels, while the decentralized management is performed on users at the same level..

7. The method for managing authority based on user objects according to Claim 6, wherein
the step of extracting the user object from the user entity comprises: dividing the user entity in the application system into object data and characteristic data, and storing the object data in an object table and the characteristic data in a characteristic table.

8. The method for managing authority based on user objects according to Claim 6, wherein, the authority resources include function authority, data authority and user-defined authority, and the authority resources are one-dimensional or multi-dimensional, or cross-authorization.

9. The method for managing authority based on user objects according to Claim 6, wherein, when the extracted user object is associated with the entity object in the application system, one user object is associated with one or more characteristics of the entity object in the application system of object association, the characteristics include identity information, attribute information and extended characteristic information.

## Patentansprüche

1. System zum Verwalten von Autorität basierend auf Benutzerobjekten, das ein Objektverwaltungsmodul (101), ein Zulassungs- und Authentifizierungsverwaltungsmodul (102) und ein Autoritätsressourcenverwaltungsmodul (103) umfasst, wobei das Zulassungs- und Authentifizierungsverwaltungsmodul (102) konfiguriert ist, um Autoritätsressourcen einem Entitätsobjekt mit derselben Identitätsinformation zu gestatten, wie ein Benutzer Autorität zum Verwenden der Autoritätsressourcen hat, und zum Ausführen von Authentifizierung, wenn das Entitätsobjekt auf die Autoritätsressourcen zugreift, um Zugriffsauthentifizierung zu erhalten, wobei nach der erfolgreichen Authentifizierung das Benutzerobjekt eine Zulassungserlaubnis erhält und auf die Autoritätsressourcen zugreift, dem Benutzerobjekt anderenfalls der Zugriff auf die Autoritätsressourcen verweigert wird;
**dadurch gekennzeichnet, dass** das Objektverwaltungsmodul (101) konfiguriert ist um ein Benutzerobjekt aus einer Benutzerentität zu extrahieren und darauffolgend eine Assoziation zwischen dem extrahierten Benutzerobjekt und Informationen in Zusammenhang mit einem Anwendungssystem herzustellen; und das Benutzerobjekt, das aus der Benutzerentität extrahiert wurde, nur abstrakte Merkmale umfasst, wobei die abstrakten Merkmale gemeinsame Merkmale der Benutzerobjekte unterschiedlicher Anwendungssysteme sind, und die Informationen in Zusammenhang mit dem Anwendungssystem Identitätsinformationen und Attributinformationen aufweisen;
und dadurch, dass das Autoritätsressourcenverwaltungsmodul (103) konfiguriert ist, um eine Autorität zu modellieren, um Domänenteilen und dezentralisierte Verwaltung auf den Autoritätsressourcen auszuführen; und die Domänenteilungsverwaltung auf Benutzern an unterschiedlichen Niveaus ausgeführt wird, während die dezentralisierte Verwaltung auf Benutzern desselben Niveaus ausgeführt wird.

2. System zum Verwalten von Autorität basierend auf Benutzerobjekten nach Anspruch 1, wobei
das Benutzerobjekt, das aus der Benutzerentität von dem Objektverwaltungsmodul extrahiert wird, Folgendes umfasst: das Teilen einer Benutzerentität in einem Anwendungssystem in Objektdaten und Merkmaldaten, und Speichern der Objektdaten in einer Objekttabelle und der Merkmaldaten in einer Merkmaltabelle.

3. System zum Verwalten von Autorität basierend auf Benutzerobjekten nach Anspruch 1, wobei die Autoritätsressourcen Funktionsautorität, Datenautorität und benutzerdefinierte Autorität aufweisen, und die Autoritätsressourcen eindimensional oder multidimensional oder übergreifende Zulassung sind.

4. System zum Verwalten von Autorität basierend auf Benutzerobjekten nach Anspruch 1, wobei das Zulassungs- und Authentifizierungsverwaltungsmodul eine Universal-Zulassungsschnittstelle und eine Universal-Authentifizierungsschnittstelle bereitstellt, wobei die Autoritätsressourcen durch die Zulassungsschnittstelle für das Benutzerobjekt, das von dem Objektverwaltungsmodul extrahiert wurde, zugewiesen werden, wenn das Benutzerobjekt auf ein Anwendungssystem zugreift, wobei die Zugriffsauthentifizierung durch die Authentifizierungsschnittstelle erhalten wird, falls die Authentifizierung erfolgreich ist, das Benutzerobjekt eine Zulassungserlaubnis erhält, falls die Authentifizierung versagt, dem Objekt der Zugriff verweigert wird.

5. System zum Verwalten von Autorität basierend auf Benutzerobjekten nach Anspruch 1, wobei, wenn das Objektverwaltungsmodul das extrahierte Benutzerobjekt mit dem Entitätsobjekt in dem Anwendungssystem assoziiert, ein Benutzerobjekt mit einem oder mehr Merkmalen des Entitätsobjekts in dem Anwendungssystem der Objektassoziation assoziiert wird, die Merkmale Identitätsinformationen, Attributinformationen und erweiterte Merkmalinformationen aufweisen.

6. Verfahren zum Verwalten von Autorität basierend auf Benutzerobjekten, das einen Schritt des Zulassens von Autoritätsressourcen zu einem Entitätsobjekt mit denselben Identitätsinformationen umfasst, wie ein Benutzer Autorität hat, um die Autoritätsressource zu verwenden und Authentifizierung ausführt, wenn das Benutzerobjekt auf die Autoritätsressourcen zugreift, um Zugriffsauthentifizierung zu erhalten, wobei nach dem erfolgreichen Authentifizieren das Benutzerobjekt eine Zulassungserlaubnis erhält und auf die Autoritätsressourcen zugreift, dem Benutzerobjekt anderenfalls der Zugriff auf die Autoritätsressourcen verweigert wird;
**dadurch gekennzeichnet, dass** es die folgenden Schritte aufweist:
Extrahieren eines Benutzerobjekts aus einer Benutzerentität und darauf folgend Herstellen einer Assoziation zwischen dem extrahierten Benutzerobjekt und Informationen in Zusammenhang mit einem Anwendungssystem; wobei das Benutzerobjekt, das aus der Benutzerentität extrahiert wird, nur abstrakte Merkmale aufweist, wobei die abstrakten Merkmale gemeinsame Merkmale der Benutzerobjekte unterschiedlicher Anwendungssysteme sind, und die Informationen in Zusammenhang mit dem Anwendungssystem Identitätsinformationen und Attributinformationen aufweisen;
Modellieren einer Autorität und Ausführen von Domänenteilen und dezentralisierter Verwaltung auf den Autoritätsressourcen; wobei die Domänenteilungsverwaltung auf Benutzern an unterschiedlichen Niveaus ausgeführt wird, während die dezentralisierte Verwaltung auf Benutzern an demselben Niveau ausgeführt wird.

7. Verfahren zum Verwalten von Autorität basierend auf Benutzerobjekten nach Anspruch 6, wobei
der Schritt des Extrahierens des Benutzerobjekts aus der Benutzerentität Folgendes umfasst: Teilen der Benutzerentität in dem Anwendungssystem in Objektdaten und Merkmaldaten, und Speichern der Objektdaten in einer Objekttabelle und der Merkmaldaten in einer Merkmaltabelle.

8. Verfahren zum Verwalten von Autorität basierend auf Benutzerobjekten nach Anspruch 6, wobei die Autoritätsressourcen Funktionsautorität, Datenautorität und benutzerdefinierte Autorität aufweisen, und die Autoritätsressourcen eindimensional oder multidimensional oder übergreifende Zulassung sind.

9. Verfahren zum Verwalten von Autorität basierend auf Benutzerobjekten nach Anspruch 6, wobei, wenn das extrahierte Benutzerobjekt mit dem Entitätsobjekt in dem Anwendungssystem assoziiert ist, ein Benutzerobjekt mit einem oder mehreren Merkmalen des Entitätsobjekts in dem Anwendungssystem von Objektassoziation assoziiert ist, die Merkmale Identitätsinformationen, Attributinformationen und erweiterte Merkmalinformationen aufweisen.

## Revendications

1. Système de gestion d'autorité sur la base d'objets utilisateurs, comprenant un module de gestion d'objet (101), un module de gestion d'authentification et d'autorisation (102) et un module de gestion de ressources d'autorité (103), dans lequel le module de gestion d'authentification et d'autorisation (102) est configuré pour autoriser des ressources d'autorité à un objet entité avec les mêmes informations d'identité qu'un utilisateur a autorité pour utiliser la ressource d'autorité et pour réaliser une authentification lorsque l'objet entité accède aux ressources d'autorité de façon à obtenir une authentification d'accès, dans lequel, après la réussite de l'authentification, l'objet utilisateur obtient une permission d'autorisation et accède aux ressources d'autorité, sinon, l'objet utilisateur se voit refuser l'accès aux ressources d'autorité ;
**caractérisé en ce que** le module de gestion d'objet (101) est configuré pour extraire un objet utilisateur d'une entité utilisateur et ultérieurement pour établir une association entre l'objet utilisateur extrait et des informations liées à un système d'application ; et l'objet utilisateur extrait de l'entité utilisateur comprend uniquement des caractéristiques abrégées, les caractéristiques abrégées étant des caractéristiques communes des objets utilisateurs de différents systèmes d'application, et les informations liées au système d'application incluant des informations d'identité et des informations d'attribut ;
et **en ce que** le module de gestion de ressources d'autorité (103) est configuré pour modéliser une autorité, pour réaliser une gestion décentralisée et scindée en domaine sur les ressources d'autorité ; et la gestion scindée en domaine est réalisée sur des utilisateurs à différents niveaux, tandis que la gestion décentralisée est réalisée sur des utilisateurs au même niveau.

2. Système de gestion d'autorité sur la base d'objets utilisateurs selon la revendication 1, dans lequel
l'objet utilisateur extrait de l'entité utilisateur par le module de gestion d'objet comprend : la division d'une entité utilisateur dans un système d'application en données d'objet et en données de caractéristiques, et le stockage des données d'objet dans une table d'objets et des données de caractéristiques dans une table de caractéristiques.

3. Système de gestion d'autorité sur la base d'objets selon la revendication 1, dans lequel les ressources d'autorité incluent une autorité de fonction, une autorité de données et une autorité définie par utilisateur, et les ressources d'autorité sont unidimensionnelles ou multidimensionnelles, ou une autorisation croisée.

4. Système de gestion d'autorité sur la base d'objets utilisateurs selon la revendication 1, dans lequel le module de gestion d'authentification et d'autorisation fournit une interface d'autorisation universelle et une interface d'authentification universelle, les ressources d'autorité sont allouées par l'intermédiaire de l'interface d'autorisation pour l'objet utilisateur extrait par le module de gestion d'objet, lorsque l'objet utilisateur accède à un système d'application, l'authentification d'accès est obtenue par l'intermédiaire de l'interface d'authentification, si l'authentification réussit, l'objet utilisateur obtient une permission d'autorisation, si l'authentification échoue, l'objet se voit refuser l'accès.

5. Système de gestion d'autorité sur la base d'objets utilisateurs selon la revendication 1, dans lequel, lorsque le module de gestion d'objet associe l'objet utilisateur extrait à l'objet entité dans le système d'application, un objet utilisateur est associé à une ou plusieurs caractéristiques de l'objet entité dans le système d'application d'une association d'objet, les caractéristiques incluent des informations d'identité, des informations d'attribut et des informations de caractéristiques étendues.

6. Procédé de gestion d'autorité sur la base d'objets utilisateurs, comprenant une étape d'autorisation de ressources d'autorité à un objet entité avec les mêmes informations d'identité qu'un utilisateur a autorité pour utiliser la ressource d'autorité et réaliser une authentification lorsque l'objet utilisateur accède aux ressources d'autorité de façon à obtenir une authentification d'accès, dans lequel, après la réussite de l'authentification, l'objet utilisateur obtient une permission d'autorisation et accède aux ressources d'autorité, sinon, l'objet utilisateur se voit refuser l'accès aux ressources d'autorité ;
**caractérisé en ce qu'**il comprend les étapes suivantes :
l'extraction d'un objet utilisateur d'une entité utilisateur et ultérieurement l'établissement d'une association entre l'objet utilisateur extrait et des informations liées à un système d"application ; dans lequel l'objet utilisateur extrait de l'entité utilisateur comporte uniquement des caractéristiques abrégées, les caractéristiques abrégées étant des caractéristiques communes des objets utilisateurs de différents systèmes d'application, et les informations liées au système d'application incluant des informations d'identité et des informations d'attribut ;
la modélisation d'une autorité, et la réalisation d'une gestion décentralisée et scindée en domaine sur les ressources d'autorité ; dans lequel la gestion scindée en domaine est réalisée sur des utilisateurs à différents niveaux, tandis que la gestion décentralisée est réalisée sur des utilisateurs au même niveau.

7. Procédé de gestion d'autorité sur la base d'objets utilisateurs selon la revendication 6, dans lequel
l'étape d'extraction de l'objet utilisateur de l'entité utilisateur comprend : la division de l'entité utilisateur dans le système d'application en données d'objet et en données de caractéristiques, et le stockage des données d'objet dans une table d'objets et des données de caractéristiques dans une table de caractéristiques.

8. Procédé de gestion d'autorité sur la base d'objets utilisateurs selon la revendication 6, dans lequel les ressources d'autorité incluent une autorité de fonction, une autorité de données et une autorité définie par utilisateur, et les ressources d'autorité sont unidimensionnelles ou multidimensionnelles, ou une autorisation croisée.

9. Procédé de gestion d'autorité sur la base d'objets utilisateurs selon la revendication 6, dans lequel, lorsque l'objet utilisateur extrait est associé à l'objet entité dans le système d'application, un objet utilisateur est associé à une ou plusieurs caractéristiques de l'objet entité dans le système d'application d'une association d'objet, les caractéristiques incluent des informations d'identité, des informations d'attribut et des informations de caractéristiques étendues.
